# EUROPEAN PATENT APPLICATION

(11) **EP 2 526 765 A1**
(43) Date of publication of application: **28.11.2012**
(21) Application number: 12002212.4
(22) Date of filing: 27.03.2012
(51) Int. Cl.: A01K 15/02

(54) **Animal training or animal game device**

(30) Priority: 27.05.2011 UA 2011006673
(71) Applicant: Synytsya, Yuriy, Chernigiv (UA)
(72) Inventor: Synytsya, Yuriy, Chernigiv (UA)
(74) Representative: UEXKÜLL & STOLBERG

(57) **Abstract**

The invention (hereinafter - device) belongs to devices for animal education or training and may be used for game, recreational or recovery exercises with animal, predominantly with dog, and also for animal therapeutic exercises.

In the animal training or animal game device, having the frame in the form of torus ring of ethylene vinyl acetate, the ratio of the torus ring cross-section d diameter to the frame torus ring greater D diameter is defined by the ratio: d=0.1...0.2D.

The invention allows to improve the performance of game, recreational and recovery exercises with animal, predominantly with dog, and also of therapeutic exercises by means of training or game intensity increase, higher use safety for man and animal, and also simplification of the device making and use.

## Description

The invention (hereinafter - device) belongs to devices for animal education or training and may be used for game, recreational or recovery exercises with animal, predominantly with dog, and also for animal therapeutic exercises.

The applicant is aware of many devices, similar to the claimed one by the set of essential features, among which the closest are the following.

One of the known devices has the frame of ethylene vinyl acetate. The frame is made of one part that has the form of disc with a hole in its center. The frame is combined with nylon or polypropylene elastic material layer, covering the frame. The elastic material layer has zones for animal biting at the device use. The size of these biting zones is defined with a view to take at least a part of animal jaw. On the elastic material surface holding handles are arranged, made of ethylene vinyl acetate. Holding handles are arranged circle-wise the disc and have a form of embossed decorative element, for instance, of stylized bone image (USA Patent Claim #2007 0026758, published in February 1, 2007, IPC: A 63 N 27/00).

The known device disadvantage is increased gross weight of the device, caused by the presence of extra elastic material layer. This leads to potential limitation of the persons, able to use the device (children, women). The elastic material layer design of nylon or polypropylene leads to potential smell occurrence in the device, which may affect the animal and stay on man hands at the device use. Also the elastic material extra layer reduces the device strength, because it may not be able to withstand at the grip by animal jaws. At that, the device design of several combined with each other parts (the frame, elastic material layer and holding handles) and a need to have biting zones makes the device relatively difficult to make and use.

The frame design in the form of disc limits its application methods, especially during training or games, i.e. a man may only throw the known device in the air and only in stated manner, which makes the performance of some exercises impossible. Also such form of the frame has relatively small degree of safety, especially at performance of some exercises with animal, for instance, during such an exercise, as "Jumping" in case of dog training, which leads to that the device can't withstand severe physical activity. At that, such form of training equipment has relatively little cushioning effect, which reduces animal teeth and gum injuries prevention at the device biting.

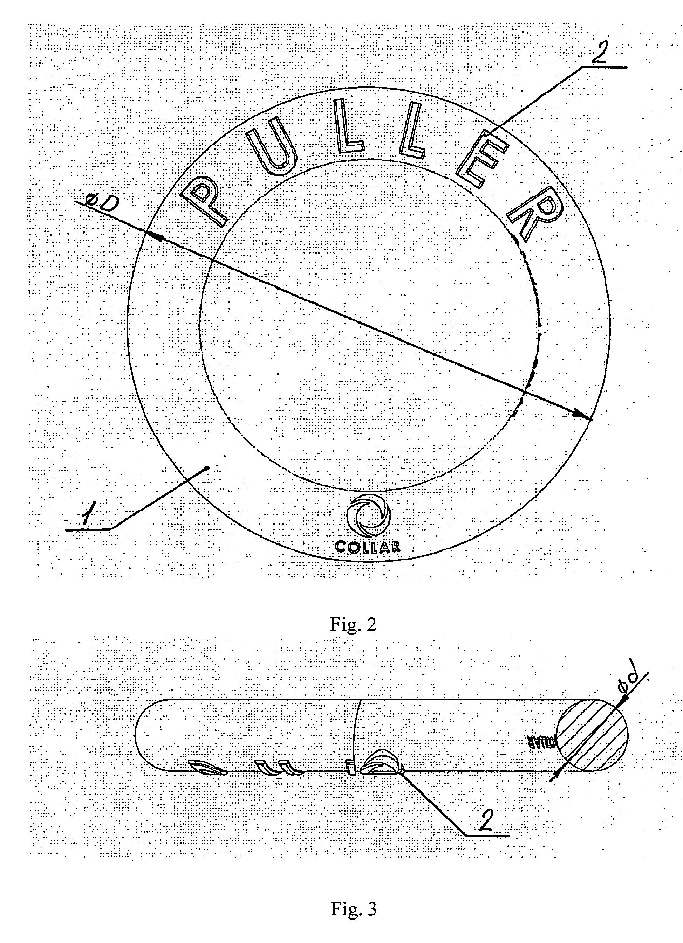

As the prototype, the device is accepted, having the frame in the form of torus ring ring of ethylene vinyl acetate. The frame is designed of one part, having enough flexibility and elasticity (USA Patent Claim #2009/0314222, published in December 24, 2009, Fig. 2, Subject of Invention i. 1, 2, IPC: A 01 K 29/00).

The known prototype has rather simple to make and use structure, allowing to reduce the device weight in comparison with its analogues, to make it floatable, with no extra smells existence, and such that does not reduce animal teeth and gum injuries prevention at the device biting.

The prototype disadvantage is that the device use according to the prototype does not allow to use it for animals with different jaw sizes, particularly for different dog breeds, at simultaneous provision of safety of the device frame holding by hand of the person, who use it, e.g., to perform the "Pulling" exercise, for which simultaneous contact with the device of dog and man is required.

In addition, the device frame design of one part reduces animal training intensity, because of impossibility to give animal needed physical activity for required motor features development or for more quick restorative function.

At that, the prototype has no any handles for holding by man, which reduces its usability and gives a potential to get injuries both for man and animal.

The invention is based on the task to improve the device versatility in order to use it for training or games with animals of different jaw sizes, with simultaneous increase of intensity of training or games, where the device is used, and simultaneous maintenance of the device making and use simplicity.

Additional technical result of the invention is the improvement of usability and safety for man at the training equipment use.

The assigned task is fulfilled in such a way that in the animal training or animal game device, having the frame in the form of torus ring of ethylene vinyl acetate, according to the invention, the ratio of the torus ring cross-section d diameter to the frame torus ring greater D diameter is defined by the ratio: d=0.1...0.2D.

It is worth mentioning that animals, especially dogs, when you take them, often have excessive aggression, damage interior items, express disobedience to man, get diseases, including of locomotor system, obesity. The reason of this is low rate of physical and psychoemotional activity. Especially, this concerns heavy weight animals, for instance, dogs of large breeds.

On this basis, the inventor conducted the device test run, performing some exercises with dogs. In the process of these tests conducting the inventor found that the technical result is reached only at predeterminated ratio of the outside torus ring diameter and its cross-section diameter. Mentioned ratio allows also effectively use the device for training dogs, quite different by their body sizes.

Thus, the inventor found that at performance of some exercises with dog, for instance, such as "Jumping" or "Pulling", where simultaneous holding of the device frame part by both dog and man is required, the provision of every device frame part grip possibility by animals with different jaw sizes (e.g., by dogs of different breeds), with simultaneous reduction of the animal jaws and man hand clash probability, is affected by the torus ring cross-section d diameter and its ratio to the torus ring greater D diameter of every device frame part. Thus, the torus ring cross-section d diameter affects the possibility of every device frame part grip by animals with different jaw sizes, and the torus ring greater D diameter affects the probability of the animal jaws and man hand clash. In such a manner, the inventor cleared up that the optimum ratio of the torus ring cross-section d diameter to the torus ring greater D diameter for every device frame part is d=0.1...0.2D ratio, allowing to reduce potential of injuries and occasional bites from the side of animal and to improve the device safety at the grip of its part by animal.

Conducted tests show that dogs of different breeds are more likely to take device just with such a diameter ratio.

The device frame may consist of two separate parts, each one designed in the form of torus ring of ethylene vinyl acetate.

Such a design of the device frame allows using it separately for each man hand. Therefore, at such device use the training intensity is significantly increased, allowing to give animal required physical activity in rather short time period.

In the process of tests conducting, the inventor found that at working out of such exercise as "Running" the device frame of two separate parts use forces dog to run required for the exercise time quantity and at longer distances in comparison with the prototype, with no exercise tempo slowdown. In addition, at training at the limited distances (e.g., in the city conditions), when the training equipment is used, high training tempo at the short distances is maintained.

The inventor also found that in case of absence in dog of item giving experience, using two frame parts simultaneously, dog attention is easy to transfer from one part of the device frame to another part, thereby making the exercise with dog longer.

Also during the dog "Jumping" exercise performance the presence of two frame parts promotes the greater attention concentration and greater speed of response for man actions, because man offers dog an opportunity to possess by turns at first one part of the device frame, and, without letting it out of hands, offers another part of the frame. Thereby, two frame parts use allows training dog to do interception.

During the "Pulling" exercise performance man offers dog by turns to pull every part of the device frame. In such a way, dog is trained to acquire correct grip and skills of giving item into man hands. Using two frame parts during this exercise performance, simultaneously those groups of dog muscles are trained, which had not enough physical activity during the "Running" and "Jumping" exercises performance.

In such a way, simultaneous use of both training equipment frame parts will allow to give animal required physical activity and at the same time will not prolong the time of training or game with animal. Thus, the inventor found that the performance of three above mentioned exercises for 20 minutes using the claimed device gives dog physical activity equal to 5 km of intensive mode running or two-hour training with similar devices on the ground.

Identical design of the device frame parts simplifies the technology of their making, transportation and also use at training or game with animals.

Every part of the frame may additionally have handle for holding by man.

This will allow to improve reliability of the frame part holding by hand, will allow to avoid its sliding, especially at the exercise of "Pulling" type performance, during which animal rather strongly pull the part of device frame to itself.

Man holding handles may be designed in the form of letters and/or numbers and/or alphabet symbols and/or geometrical figures, made embossed on the outside of every frame part.

Such a design of man holding handles additionally simplifies the device making technology, because of possibility of their making together with the frame parts without conducting supplementary technological operations, e.g., by the casting method. At that, the handles of such a type use reduces the animal injury probability in case if animal jaws hit these handles at biting, and also allows to place in such a way on the device surface the information for man, e.g., the device manufacturer name etc.

Therefore, fulfillment of such invention tasks as increase of the training intensity and safety for man and animal, and increase of the device versatility is accompanied also with the device making and use simplification.

In such a way, the set of mentioned essential features actually creates the set of the device features, such as light weight, elastic nontraumatic for animal material (ethylene vinyl acetate) of the frame, which even at sustained device use stays rather firm, and geometrical device dimensions, accepted by animals.

The use of ethylene vinyl acetate, having lower density relative to the water, as the device frame material gives the device frame high floatage and, in such a manner, allows performing the "Swimming" exercise with dog, expanding the device application field. Thus, the item is highly visible for animal at the "Swimming" exercise performance, because of high floatage in the water. There was also found that the frame design in the form of torus ring makes it easier to grip in the water because of that the form of torus ring is the same from all sides, as opposed to similar devices having different form, e.g., of barbell or cylinder. Above listed allows to get more potential for the device use, and also increases the interest of animal, particularly dog, for training or game, increasing their intensity.

In order to explain the invention, a preferred embodiment of the invention is presented below. The example is illustrated by the following drawings, particularly:

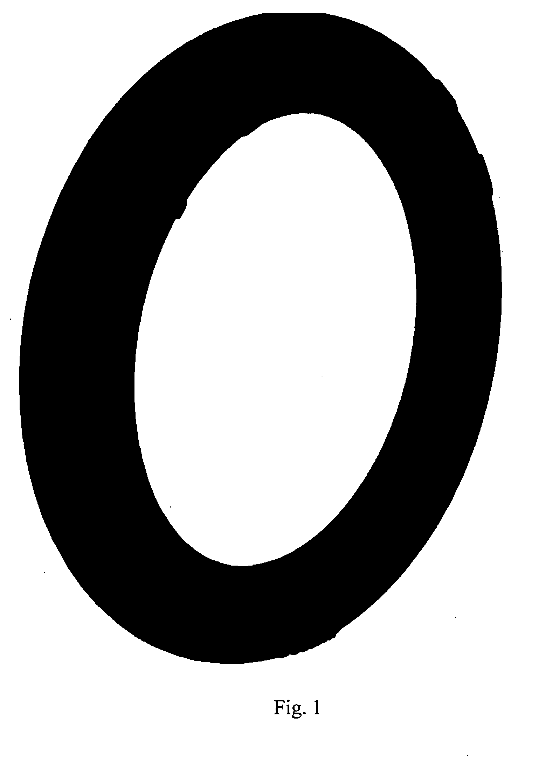

- On the Fig. 1 the device overall view is shown
- On the Fig. 2 the device frame overhead view is shown
- On the Fig. 3 the device frame side view is shown

The drawings, description, and the presented preferred embodiment by no means limit the scope if the invention, and only explain the invention essence.

The device has the frame 1, made of ethylene vinyl acetate, and has the form of torus ring. The torus ring cross-section d diameter is 0.1...0.2 of the torus ring greater D diameter. In order to increase the training or game intensity, the frame 1 may include two independent similar parts. On the frame 1 surface the handles 2 for man holding of these parts are made. Handles 2 have embossed letters and symbols.

The device is used in the following way.

To perform the running exercises, the device frame 1 parts are by turns thrown to animal. To perform the jumping, every part of the training equipment frame is held using the handles 2 in hands for alternate grip of these parts by animal. To perform the weight-lifting exercises, every part of the training equipment frame is held using the handles 2 with its simultaneous pulling in different directions.

The invention allows to improve the performance of game, recreational and recovery exercises with animal, predominantly with dog, and also of therapeutic exercises by means of training or game intensity increase, higher use safety for man and animal, and also simplification of the device making and use.

## Claims

1. Animal training or animal game device, having the frame in the form of torus ring of ethylene vinyl acetate, **characterized in that** the ratio of the torus ring cross-section d diameter to the torus ring frame greater D diameter is defined by the ratio: d=0,1...0,2D.

2. Animal training or animal game device according to claim 1, **characterized in that** the device frame consists of two separate parts, each one designed in the form of torus ring of ethylene vinyl acetate.

3. Animal training or animal game device according to claim 1 or claim 2, **characterized in that** the device frame consists of two separate identical parts.

4. Animal training or animal game device according to claim 1, **characterized in that** the frame additionally has the handle for man holding.

5. Animal training or animal game device according to claim 1 or claim 4, **characterized in that** the handle for man holding is designed as letters and/or numbers and/or alphabet symbols and/or geometrical figures, made embossed on the outside of every frame part.
